# FASCICULE DE BREVET EUROPEEN

(11) **EP 1 062 109 B1**
(45) Date de publication et mention de la délivrance du brevet: **25.06.2003**
(21) Numéro de dépôt: 99903785.6
(22) Date de dépôt: 19.02.1999
(51) Int. Cl.: B60H 1/24

(54) **DISPOSITIF D'AERATION, DE CHAUFFAGE ET DE CLIMATISATION D'UN HABITACLE D'UN VEHICULE AUTOMOBILE**
LÜFTUNG, HEIZUNG UND/ODER KLIMAANLAGE DES FAHRGASTRAUMES EINES KRAFTFAHRZEUGES
VENTILATING, HEATING AND AIR CONDITIONING DEVICE FOR MOTOR VEHICLE PASSENGER COMPARTMENT

(30) Priorité: 20.02.1998 FR 9802068
(43) Date de publication de la demande: 27.12.2000
(73) Titulaire: Renault s.a.s., 92100 Boulogne Billancourt (FR)
(72) Inventeur: COLINET, André, F-92800 Puteaux (FR)
(86) Numéro de dépôt international: FR9900373
(87) Numéro de publication internationale: WO99042314

(56) Documents cités:
- EP-A- 0 210 548
- EP-A- 0 503 987
- EP-A- 0 673 796
- FR-A- 2 659 908
- FR-A- 2 717 747
- US-A- 2 696 774

## Description

L'invention concerne un dispositif d'aération, de chauffage et de climatisation d'un habitacle d'un véhicule automobile.

L'invention concerne plus particulièrement un dispositif d'aération, de chauffage et de climatisation, d'un habitacle d'un véhicule automobile, du type comportant des orifices d'admission d'air intérieur et extérieur à l'habitacle du véhicule et au moins un conduit d'admission d'air associé auxdits orifices, qui alimente au moins un ventilateur principal qui force un flux d'air d'admission à travers au moins un échangeur thermique en direction d'un distributeur dont les sorties sont reliées par des tuyaux à des orifices associés de refoulement d'air répartis dans l'habitacle, et du type comportant des moyens de commande du ventilateur principal, de l'échangeur et du distributeur qui permettent de diffuser sélectivement dans des zones de l'habitacle des flux d'air de refoulement de débit et de température variables.

On connaît de nombreux dispositifs d'aération , de chauffage et de climatisation destinés à diffuser des flux d'air à diverses températures et en diverses zones de l'habitacle d'un véhicule automobile.

II s'agit pour la plupart de dispositifs disposés entre la planche de bord et le compartiment moteur du véhicule, qui comportent un ventilateur qui prélève de l'air soit à l'extérieur, soit à l'intérieur du véhicule, pour le diriger vers un radiateur de chauffage qui utilise le fluide du refroidissement du moteur thermique ou un vers un échangeur de refroidissement. L'air ainsi échauffé ou refroidi est alors dirigé par le distributeur et un système de tuyaux en divers points de l'habitacle selon les souhaits des passagers. Ces tuyaux débouchent directement dans des orifices adéquats de la planche de bord pour assurer le confort des passagers avant, à la base du pare-brise pour en assurer le dégivrage, ou se prolongent vers l'arrière du véhicule, généralement dissimulés dans des éléments de l'aménagement intérieur, tels que la console centrale, ou les habillages de seuils de portes.

Un problème se pose lorsque, pour des considérations d'encombrement et d'esthétique, on désire éviter que ces tuyaux n'empiètent sur l'espace intérieur habitable.

Un premier élément de solution consiste à réaliser des dispositifs qui comportent des tuyaux dissimulés dans des éléments de structure du véhicule, comme des bas de caisse ou d'autres éléments du soubassement.

Le document US-A-2.696 774 décrit un tel agencement.

Dans ce cas, l'air, après avoir été prélevé à l'avant du véhicule, est acheminé en partie à un climatiseur par des cavités tubulaires faisant partie de la structure du véhicule. D'autres zones de ces mêmes cavités tubulaires permettent d'acheminer l'air réchauffé ou refroidi aux places des passagers arrière.

Le document FR-A-2717747 comportant les caractéristiques du préambule de la revendication 1, décrit un dispositif d'aération de chauffage et de climatisation d'un habitacle d'un véhicule automobile du type comportant des orifices d'admission (54) d'air intérieur et extérieur à l'habitacle du véhicule et au moins un conduit d'admission d'air (52) associé auxdits orifices, qui alimente au moins un ventilateur principal (60) qui force un flux d'air d'admission à travers au moins un échangeur thermique (64) en direction d'un dispositif de traitement (12) dont les sorties sont reliées à des éléments creux de la structure.

Cette solution n'est néanmoins pas satisfaisantes car les variations de température liées aux échanges thermiques entre les parois des éléments de structure et le milieu extérieur pénalisent grandement le rendement de l'installation.

Un autre élément de solution est apporté par les dispositifs pour lesquels l'air en provenance du distributeur est acheminé dans des tuyaux rapportés de section rectangulaire de faible épaisseur dissimulés dans l'habillage du sol du véhicule.

Le document EP-A-0.210.548 décrit un tel dispositif.

Cette disposition réduit considérablement les échanges thermiques avec l'extérieur, mais elle ne peut s'appliquer qu'à des véhicules de taille moyenne, car de longs tuyaux ne sauraient s'appliquer à un véhicule du type d'un monospace possédant à la fois une grande longueur et un grand volume intérieur, les pertes de charge dans les tuyaux étant trop importantes.

Dans le cas d'un monospace, il est possible faire appel à une architecture du dispositif d'aération, de chauffage et de climatisation de l'habitacle utilisant des cavités de la structure du véhicule pour acheminer l'air aux passagers avant, aux passagers arrière, et aux vitres, ce qui permet d'envisager une implantation longitudinale intermédiaire du dispositif. Les sorties du distributeur du dispositif peuvent donc reliées à différentes cavités de la structure du véhicule contre laquelle est accolé le distributeur.

Le document EP-B1-0.503.987 décrit un tel dispositif.

Cette disposition résout le problème des pertes de charge mais elle reste pénalisante en ce qui concerne les échanges thermiques avec le milieu extérieur. Pour y remédier, on est contraint de surdimensionner les échangeurs et le ventilateur, inconvénient considérable pour un dispositif qui a au contraire vocation à occuper un espace minimum sur un des côtés du véhicule pour pouvoir être logé en position longitudinale intermédiaire, par exemple dans un logement à proximité d'un montant du véhicule, sans empiéter sur l'espace intérieur habitable.

Pour remédier à ces inconvénients, l'invention se propose un dispositif du type décrit ci-dessus, caractérisé en ce que le distributeur est agencé transversalement en position centrale, et longitudinalement en arrière d'une rangée de sièges, et en ce que les sorties du distributeur sont disposées au niveau du plancher du véhicule.

Selon d'autres caractéristiques de l'invention :
- le distributeur comporte un boîtier dans une face supérieure duquel sont disposées les sorties auxquelles sont reliés les différents tuyaux de refoulement d'air dans l'habitacle du véhicule ;
- le boîtier du distributeur fait partie d'un bloc qui comporte un échangeur thermique de chauffage et un échangeur thermique de refroidissement ;
- le bloc comporte des moyens permettant de réaliser différents mélanges de flux d'air et de les canaliser vers le distributeur pour être diffusés simultanément et indépendamment à travers les différentes sorties du distributeur ;
- le bloc comporte le ventilateur principal dont une entrée permet l'admission de l'air et dont une sortie intérieure au bloc force un flux d'air à travers un échangeur de chauffage et/ou un échangeur de refroidissement ;
- les conduits d'admission et les tuyaux de refoulement d'air sont fixés sur des parois intérieures de l'habitacle du véhicule ou sont intégrés dans des éléments d'habillage intérieur du véhicule, notamment des tapis de sol et des éléments d'aménagement intérieur ;
- le conduit d'admission d'air comporte un tronçon vertical qui est relié à un orifice extérieur d'admission d'air situé sous le pare-brise du véhicule, et un tronçon horizontal, muni d'orifices d'admission d'air intérieur, qui s'étend longitudinalement à proximité de l'axe médian longitudinal du véhicule et qui est relié à l'entrée du ventilateur ;
- les tuyaux de refoulement d'air comportent deux tuyaux droit et gauche de répartition d'air aux jambes des passagers avant qui comportent successivement des tronçons horizontaux qui s'étendent longitudinalement entre le distributeur et la planche de bord du véhicule, respectivement de part et d'autre de l'axe longitudinal médian du véhicule, et qui débouchent dans deux orifices droit et gauche de refoulement d'air aux jambes des passagers avant orientés verticalement vers le bas au droit des pieds des passagers ;
- les tuyaux de refoulement d'air comportent au moins un tuyau central de refoulement d'air aux jambes des passagers arrière orienté le long de l'axe longitudinal médian du véhicule ;
- les tuyaux de refoulement d'air comportent deux tuyaux droit et gauche de répartition latérale et haute d'air, qui comportent successivement deux tronçons horizontaux opposés s'étendant transversalement, deux tronçons s'étendant verticalement le long des montants latéraux de l'habitacle du véhicule et comportant des orifices latéraux droit et gauche disposés le long des montants latéraux, et deux tronçons s'étendant longitudinalement le long des côtés du pavillon du véhicule et comportant des orifices latéraux disposés sur des côtés du pavillon du véhicule ;
- les tuyaux de refoulement d'air comportent deux tuyaux horizontaux droit et gauche de répartition d'air vers l'avant, qui comportent des tronçons qui s'étendent longitudinalement entre le distributeur et la planche de bord du véhicule en suivant l'axe médian du véhicule et qui sont reliés dans la zone basse de la planche de bord, à un dispositif de répartition avant d'air ;
- le dispositif de répartition avant d'air est commandé par les moyens de commande du dispositif d'aération, de chauffage, et de climatisation et il comporte au moins un volet qui répartit l'air entre un tuyau de dégivrage unique, auquel est associé un ventilateur auxiliaire électrique pour forcer un flux d'air au travers d'un radiateur électrique de dégivrage en direction d'orifices de dégivrage disposés le long du pare-brise du véhicule, et entre deux tuyaux transversaux indépendants droit et gauche d'aération des passagers avant qui débouchent chacun dans deux orifices d'aération, situés à mi-hauteur de la planche de bord de chaque côté des passagers avant droit et gauche.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'une partie de l'habitacle d'un véhicule équipé d'un dispositif réalisé suivant l'invention vu par un observateur situé à l'arrière gauche du véhicule et représentant l'implantation des différents éléments du dispositif dans l'habitacle du véhicule ;
- la figure 2 est une vue schématique de dessus représentant l'implantation dans l'habitacle du véhicule du dispositif réalisé suivant l'invention ;
- la figure 3 est une vue de détail de la figure 2 représentant le dispositif de répartition avant d'air fonctionnant en un mode d'aération des places avant ;
- la figure 4 est une vue de détail de la figure 2 représentant le dispositif de répartition avant d'air fonctionnant en un mode de dégivrage du pare-brise ;
- la figure 5 est une vue de détail de la figure 2 représentant le dispositif de répartition avant d'air fonctionnant en un mode mixte de dégivrage du pare-brise et d'aération des places avant ; et
la figure 6 est une vue en perspective du bloc d'aération, de chauffage et de climatisation montrant l'implantation du ventilateur, des échangeurs thermiques, du distributeur, et l'agencement de ses sorties.

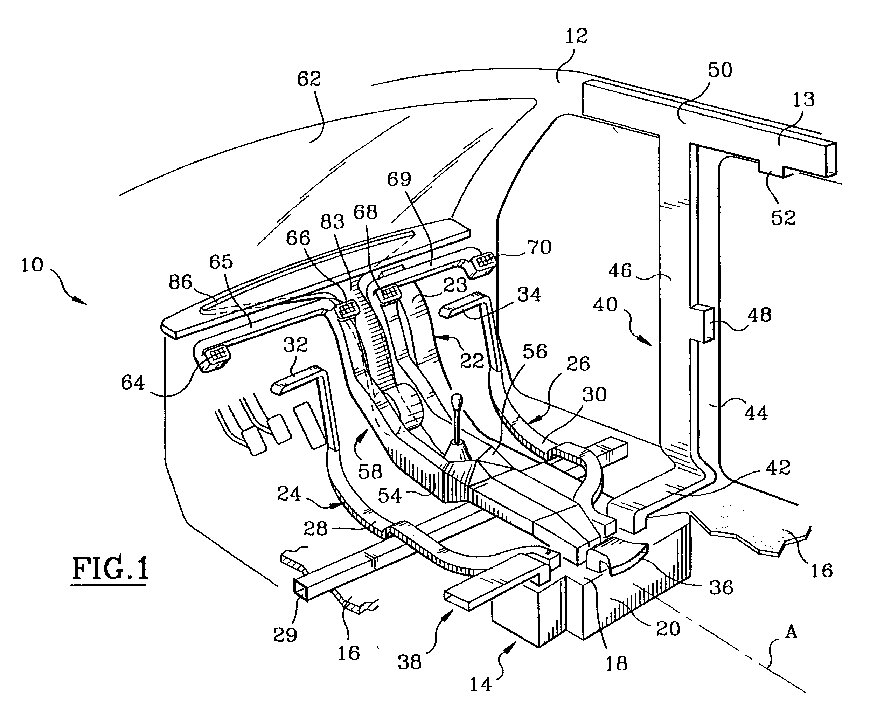

On voit sur la figure 1 l'ensemble d'un dispositif 10 d'aération, de chauffage et de climatisation réalisé selon l'invention. Le dispositif 10 prend place dans l'habitacle 12 d'un véhicule automobile de type monospace.

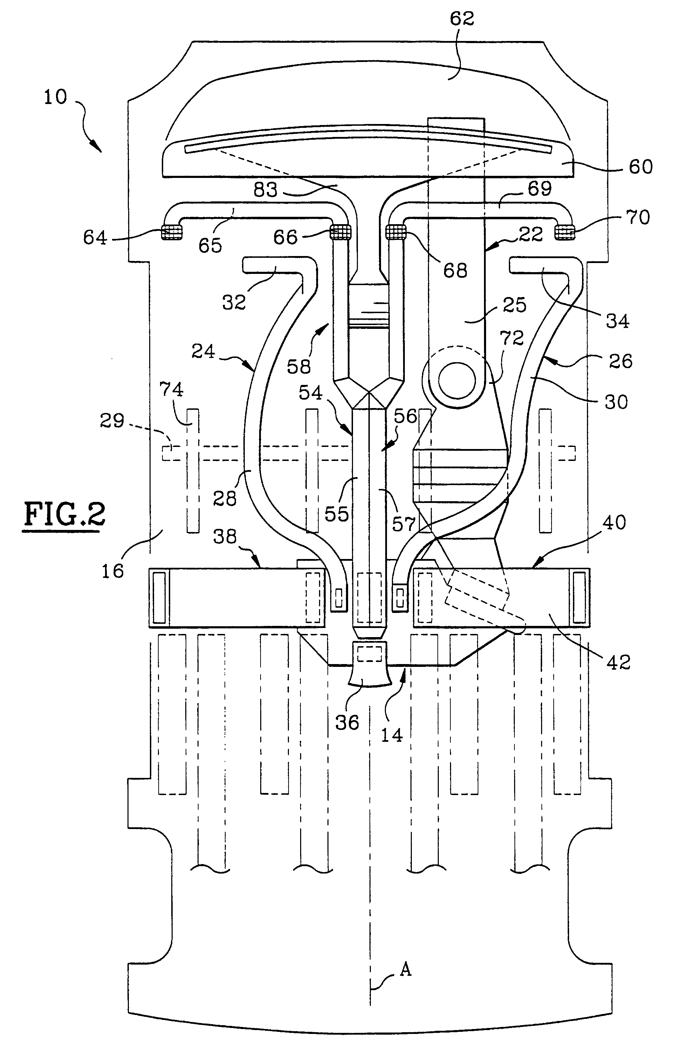

Conformément à l'invention, un bloc 14 d'aération, de chauffage et de climatisation est agencé transversalement en position centrale et longitudinalement en arrière d'une rangée de sièges (non représentés) dans un plancher 16 faisant partie de l'habitacle 12 du véhicule automobile. Une face supérieure 18 d'un distributeur 20 faisant partie du bloc 14 d'aération, de chauffage et de climatisation est disposée au niveau du plancher 16 du véhicule et est reliée par différentes sorties (non représentées) aux différents tuyaux de refoulement d'air de l'habitacle. Par ailleurs, le bloc 14 d'aération, de chauffage et de climatisation est alimenté en air par l'intermédiaire d'un conduit d'admission 22, qui est disposé longitudinalement à droite d'un axe médian longitudinal A du véhicule, selon les vues des figures 1 et 2.

Conformément à l'invention, le conduit d'admission d'air 22 comporte un orifice d'admission d'air extérieur (non représenté) et au moins un orifice d'admission d'air intérieur (non représenté). Ces orifices d'admission d'air intérieur et extérieur permettent d'alimenter sélectivement le bloc 14 d'aération, de chauffage et de climatisation par l'intermédiaire du conduit d'admission d'air 22.

La possibilité pour les passagers d'un choix sélectif entre deux sources d'admission d'air est particulièrement avantageuse dans la mesure où, le véhicule pouvant être amené à circuler dans des zones présentant une qualité de l'air médiocre, la pluralité des sources d'alimentation d'air permet soit d'alimenter le dispositif 10 d'aération, de chauffage et de climatisation avec de l'air extérieur au véhicule, filtré par exemple à travers différents filtres à particules et à odeurs, soit de recycler tout ou partie de l'air intérieur, et en toutes circonstances de maintenir à l'intérieur de l'habitacle 12 du véhicule un niveau de qualité de l'air convenant au confort des passagers.

Conformément à l'invention, les différents tuyaux de refoulement d'air permettent de diffuser en différents points de l'habitacle 12 différents flux d'air à différentes températures.

Partant du distributeur central 20, deux tuyaux gauche 24 et droit 26 de répartition d'air aux jambes des passagers avant s'étendent dans une direction sensiblement longitudinale du véhicule. Les tuyaux de répartition d'air aux jambes des passagers avant gauche 24 et droit 26 comportent respectivement des tronçons horizontaux 28 et 30 qui s'étendent longitudinalement vers l'avant du véhicule en épousant les formes du plancher 16 du véhicule et notamment d'une traverse 29 destinée à assurer la rigidité du plancher 16 du véhicule et sur laquelle peuvent être fixés les sièges de la rangée avant. Ils comportent respectivement deux crosses gauche 32 et droite 34 qui diffusent de l'air chaud en direction des pieds des passagers. En effet, il est connu que des conditions de confort optimal sont obtenues lorsque de l'air chaud est diffusé dans les zones basses du véhicule alors que de l'air plus frais est diffusé dans les zones hautes du véhicule.

Les crosses gauche 32 et droite 34 des tuyaux gauche 24 et droit 26 de répartition d'air aux passagers avant permettent pour une part de satisfaire à ce critère en dirigeant le flux d'air de haut en bas vers les jambes des passagers avant. De façon analogue, un tuyau central 36 de refoulement d'air aux jambes des passagers arrière, visible sur les vues des figures 1 et 2, orienté le long de l'axe longitudinal médian A du véhicule, permet de satisfaire à ces critères de confort et d'assurer une répartition homogène de l'air chaud dans les zones basses du véhicule situées en arrière des places avant.

Le tuyau central 36 de refoulement d'air aux jambes des passagers arrière est directement disposé sur la face supérieure 18 du bloc 14 d'aération, de chauffage et de climatisation et, de cette façon, n'empiète pas sur la partie du plancher comprise entre le bloc 14 et l'arrière du véhicule qui est par exemple dévolue à des glissières de fixation modulable de sièges du véhicule.

La diffusion de flux d'air sensiblement plus frais que ceux diffusé par les tuyaux 24, 26 et 36 est assurée suivant deux zones principales.

D'une part, deux tuyaux gauche 38 et droit 40 de répartition latérale et haute d'air permettent de diffuser des flux d'air frais dans les parties latérales et hautes du véhicule. Le tuyau 38, dont la figure 1 illustre le seul branchement sur la face supérieure 18 du distributeur 20, est symétrique du tuyau droit 40 par rapport au plan longitudinal médian du véhicule.

Le tuyau droit 40 de répartition latérale et haute d'air comporte un premier tronçon horizontal 42, visible aux figures 1 et 2, qui s'étend transversalement de part et d'autre du bloc 14 jusqu'à la base d'un montant latéral 44 de l'habitacle 12 visible figure 1. Un deuxième tronçon 46 du tuyau 40 remonte latéralement le long du montant 44 et comporte au moins un orifice latéral 48 permettant notamment l'aération des passagers arrière et/ou la ventilation des vitres latérales du véhicule (non représentées).

Le tronçon latéral vertical 46 du tuyau droit 40 de répartition latérale et haute d'air aboutit à son extrémité supérieure dans un tronçon 50 qui s'étend longitudinalement le long du côté droit 13 du pavillon (non représenté) du véhicule et qui comporte au moins un orifice latéral 52 dirigé verticalement vers le bas pour assurer une ventilation d'air frais en direction des passagers et/ou des vitres latérales du véhicule.

Comme illustré sur la figure 1, le tronçon 50 du côté 13 du pavillon est susceptible de s'étendre vers l'avant et vers l'arrière du véhicule sur toute la longueur du pavillon pour assurer une diffusion homogène d'air frais en partie haute sur toute la longueur de l'habitacle 12 du véhicule.

D'autre part, comme on le voit aux figures 1 et 2, le dispositif 10 d'aération, de chauffage et de climatisation 10 comporte deux tuyaux horizontaux gauche 54 et droit 56 qui s'étendent longitudinalement à partir de la face supérieure 18 du distributeur 20 vers l'avant du véhicule, pour aboutir à un dispositif 58 de répartition avant d'air, et qui participent à la diffusion de flux d'air sensiblement frais à l'intérieur de l'habitacle 12 du véhicule.

Le dispositif 58 de répartition avant d'air permet de canaliser le flux d'air en provenance des tuyaux horizontaux gauche 54 et droit 56 entre d'une part une platine 60 de dégivrage d'un pare-brise 62 du véhicule et, d'autre part, des aérateurs indépendants gauche 64, 66 et droit 68, 70 à la disposition des passagers avant du véhicule.

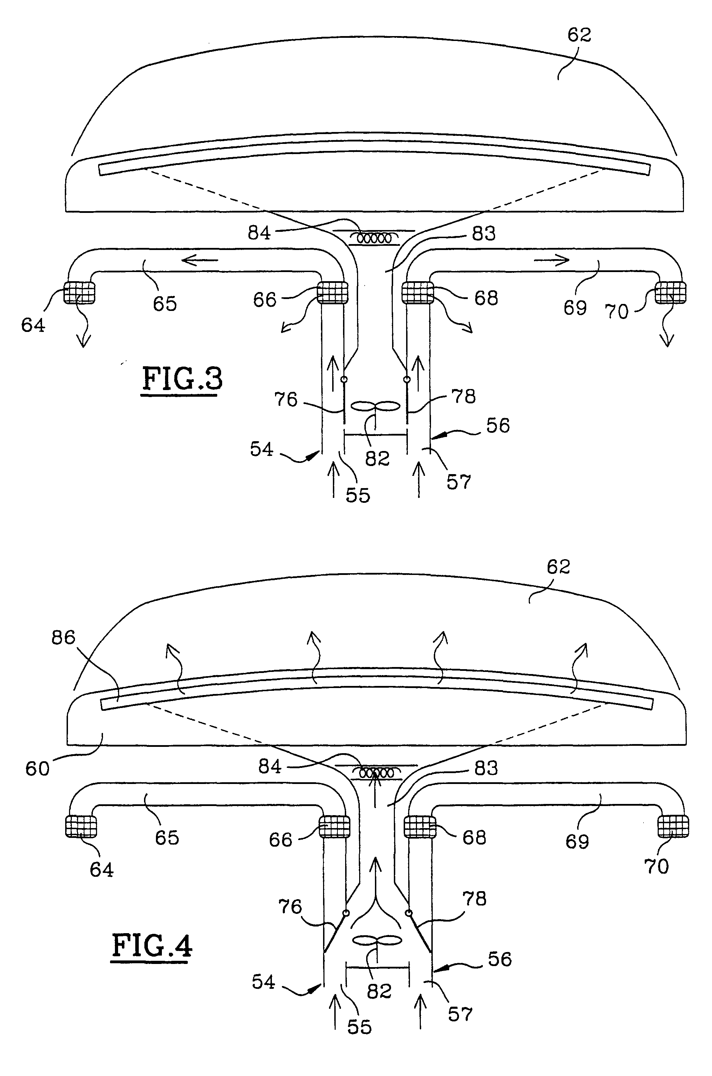

Les passagers peuvent choisir de privilégier sélectivement la diffusion d'air au niveau de la platine 60 ou des aérateurs 64, 66, 68, 70, en agissant sur le dispositif de répartition d'air 58 comme il sera expliqué ultérieurement en référence aux figures 3, 4 et 5. Le dispositif de répartition d'air 58 est particulièrement avantageux car il permet d'utiliser les flux d'air circulants dans les tuyaux gauche 54 et droit 56, et issus du distributeur 20, pour assurer simultanément ou indépendamment des fonctions de ventilation et de dégivrage.

La vue de la figure 2 illustre en particulier la disposition sur le plancher 16 des différents éléments du dispositif 10 d'aération, de chauffage et de climatisation.

La position transversale centrale et longitudinale en arrière de la rangée de sièges avant du distributeur 20 permet d'homogénéiser les longueurs de tuyaux et de conduits qui y sont reliés. A ce titre, le dimensionnement du ventilateur 72 peut être exactement adapté au flux à fournir, les pertes de charges étant sensiblement les mêmes dans les différents tuyaux qui sont sensiblement de même longueur.

Par ailleurs, les tuyaux gauche 24 et droit 26 de répartition d'air aux jambes des passagers avant sont disposés à une distance transversale de l'axe médian A du véhicule telle qu'ils passent entre des glissières 74 des sièges avant du véhicule. II en est de même pour les tuyaux de répartition latérale et haute d'air gauche 38 et droit 40 qui sont disposés transversalement entre les glissières des sièges avant et les glissières de la première rangée de sièges arrière du véhicule, par exemple dans une épaisseur d'un revêtement de sol (non représenté).

Enfin, on notera que le conduit d'admission d'air 22, disposé à droite de l'axe médian A du véhicule, peut avantageusement servir de repose-pied au passager avant droit ou au conducteur si le véhicule est destiné à un pays à conduite à gauche, et être à ce titre intégré à l'aménagement intérieur du véhicule.

La figure 3 illustre le fonctionnement du dispositif 58 de répartition avant d'air selon un premier mode de ventilation des passagers avant.

Le flux d'air frais est acheminé jusqu'au dispositif 58 de répartition avant d'air par les tuyaux gauche 54 et droit 56 de répartition d'air avant. Dans cette configuration, comme le montrent les flèches, les flux d'air sont orientés en priorité vers les passagers avant et indépendamment pour chaque passager. Chaque tuyau de répartition d'air vers l'avant peut par conséquent diffuser un flux d'air à une température sensiblement différente du flux d'air acheminé par l'autre tuyau. Les flux d'air de ventilation sont respectivement diffusés par les deux séries 64, 66 et 68, 70 d'aérateurs des passagers avant. Ceci permet de diffuser aux passagers avant droit et gauche des flux d'air à des températures différentes, au gré de chaque passager. Pour ce faire, le dispositif 58 comporte un volet gauche 76 et droit 78 qui guide chaque flux d'air le long d'un boîtier 80 , alors fermé, qui contient un ventilateur 82 à l'arrêt.

Sur la figure 4, le dispositif de répartition avant d'air 58 est commandé par les passagers en vue d'assurer le dégivrage du pare-brise avant 62. Dans cette configuration, les volets gauche 76 et droit 78 sont ouverts et détournent les flux d'air en provenance du distributeur 20, acheminés par les tuyaux de répartition d'air avant 54 et 56, en les mélangeant dans un tuyau 83 par l'intermédiaire d'un ventilateur supplémentaire 82, en marche, qui force le flux ainsi constitué à travers un radiateur additionnel 84 pour réchauffer le flux d'air avant et le pulser en direction d'une série d'orifices 86 appartenant à la platine de dégivrage 60.

Dans cette configuration, les flux en provenance des tuyaux gauche 54 et droit 56 sont mélangés afin d'assurer un mélange homogène qui puisse être diffusé sur toute l'étendue du pare-brise 62 afin de le dégivrer rapidement. II est en effet connu que l'efficacité d'un dégivrage de pare-brise dépend tant de la température de l'air qui est diffusé à sa surface que de sa vitesse. A ce titre, le dispositif de répartition avant d'air 58 permet un dégivrage rapide en accélérant l'air par l'intermédiaire du ventilateur 82 et en le réchauffant par l'intermédiaire du radiateur 84, qui peut par exemple être réalisé à l'aide d'un radiateur à base de matériau céramique.

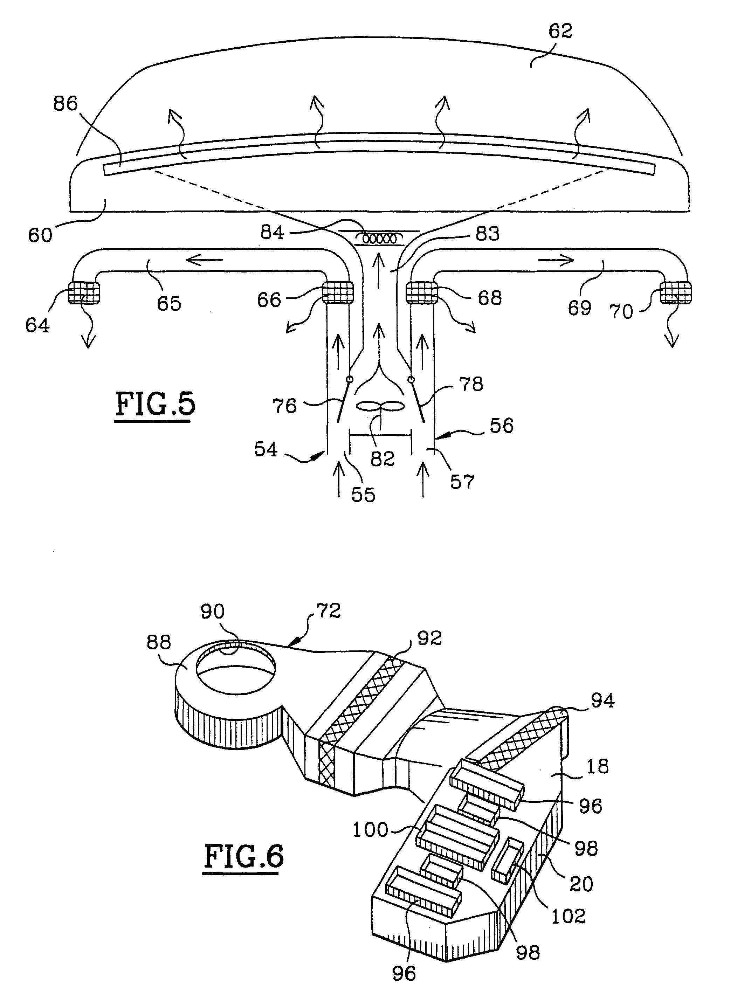

Dans le cas illustré à la figure 5 dans lequel les passagers désirent bénéficier d'une ventilation des places avant et dans lequel un dégivrage du pare-brise 62 est requis, le dispositif 58 peut ne réaliser qu'un mélange partiel des flux d'air en provenance des tubes gauche 54 et droit 56 à des fins de dégivrage. En effet, dans cette configuration, les volets gauche 76 et droit 78 du dispositif de répartition d'air avant 58 ne sont qu'entrouverts et une partie seulement de chaque flux est dévié en direction de la platine 60 de dégivrage et de ses orifices 86 de dégivrage. Pour chaque tuyau gauche 54 et droit 56 de répartition d'air avant, une partie seulement du flux d'air est mélangé à une partie du flux d'air en provenance de l'autre tuyau, l'autre partie étant acheminée en direction des orifices de ventilation gauche 64, 66 et droit 68, 70 afin d'assurer un confort thermique indépendant pour chaque passager avant, comme décrit précédemment en référence à la figure 3.

Cette disposition est particulièrement avantageuse car elle permet de réaliser simultanément un dégivrage et une ventilation des passagers avant en évitant une multiplication des tuyaux dans l'habitacle, les seuls tuyaux amenant l'air du distributeur vers l'avant du véhicule étant les tuyaux gauche 54 et droit 56 de répartition d'air avant, cette disposition procurant de plus un gain de place important.

Sur la vue de la figure 6 est illustrée une vue d'ensemble du bloc 14 d'aération, de chauffage et de climatisation, qui montre l'implantation des différents éléments qui le constituent.

De manière connue, le bloc 14 comporte le ventilateur principal 72 dont une face supérieure de boîtier 88 comporte un orifice 90 qui reçoit l'extrémité du tuyau d'admission d'air 22. Le ventilateur 72 est inclus dans le corps et force un flux d'air au travers d'un échangeur de chauffage 92 ou, par l'intermédiaire d'un dispositif à volets (non représenté) intérieur au bloc 14, au travers d'un échangeur de refroidissement 94, de sorte que différents flux d'air à différentes températures peuvent être obtenus en sortie des orifices supérieurs 96, 98, 100 et 102 formés dans la face supérieure 18 du distributeur 20 qui en constituent les sorties.

Les sorties 96 sont reliées aux tuyaux de distribution latérale et haute d'air 38 et 40, les sorties 98 sont reliées aux tuyaux de répartition d'air aux jambes des passagers avant 24 et 26, les sorties 100 sont reliées aux tuyaux de répartition d'air avant 54 et 56, et la sortie 102 est reliée au tuyau central de refoulement d'air aux jambes des passagers arrière 36, préalablement décrits en référence à la figure 1.

Un tel bloc 14 d'aération, de chauffage et de climatisation est particulièrement avantageux car il permet dans un espace relativement restreint de grouper tous les organes de production de flux d'air à débits et températures désirés et, par conséquent, de simplifier l'implantation du bloc 14 au moment de l'assemblage du véhicule, ce qui est particulièrement avantageux en termes de coûts de fabrication.

## Revendications

1. Dispositif (10) d'aération, de chauffage et de climatisation, d'un habitacle (12) d'un véhicule automobile, du type comportant des orifices d'admission d'air intérieur. et extérieur à l'habitacle du véhicule et au moins un conduit d'admission d'air (22) associé auxdits orifices, qui alimente au moins un ventilateur principal (72) qui force un flux d'air d'admission à travers au moins un échangeur thermique (92,94) en direction d'un distributeur (20) dont les sorties (96,98,100,102) sont reliées par des tuyaux (24,26,36,38,40,54,56) à des orifices (48,52,64,66,68,70,86) associés de refoulement d'air répartis dans l'habitacle (12), et du type comportant des moyens de commande du ventilateur principal (72), de l'échangeur (92,94) et du distributeur (20) qui permettent de diffuser sélectivement dans des zones de l'habitacle des flux d'air de refoulement de débit et de température variables,
**caractérisé en ce que** le distributeur (20) est agencé transversalement en position centrale, et longitudinalement en arrière d'une rangée de sièges, et **en ce que** les sorties (96,98,100,102) du distributeur (20) sont disposées au niveau du plancher (16) du véhicule.

2. Dispositif (10) d'aération, de chauffage et de climatisation suivant la revendication 1, **caractérisé en ce que** le distributeur (20) comporte un boîtier dans une face supérieure (18) duquel sont disposées les sorties (96, 98, 100, 102) auxquelles sont reliés les différents tuyaux (24, 26, 36, 38, 40, 54, 56) de refoulement d'air dans l'habitacle (12) du véhicule.

3. Dispositif (10) d'aération, de chauffage et de climatisation suivant la revendication 2, **caractérisé en ce que** le boîtier du distributeur (20) fait partie d'un bloc (14) qui comporte un échangeur thermique de chauffage (92) et un échangeur thermique de refroidissement (94).

4. Dispositif (10) d'aération, de chauffage et de climatisation suivant la revendication 3, **caractérisé en ce que** le bloc (14) comporte des moyens permettant de réaliser différents mélanges de flux d'air et de les canaliser vers le distributeur (20) pour être diffusés simultanément et indépendamment à travers les différentes sorties (96, 98, 100, 102) du distributeur (20).

5. Dispositif (10) d'aération, de chauffage, et de climatisation suivant l'une des revendications 3 ou 4, **caractérisé en ce que** le bloc (14) comporte le ventilateur principal (72) dont une entrée (90) permet l'admission de l'air et dont une sortie intérieure au bloc force un flux d'air à travers un échangeur de chauffage (92) et/ou un échangeur de refroidissement (94).

6. Dispositif (10) d'aération, de chauffage, et de climatisation suivant l'une quelconque des revendications 2 à 5, **caractérisé en ce que** les conduits d'admission (22) et les tuyaux de refoulement d'air (24,26,36,38,40,54,56) sont fixés sur des parois intérieures de l'habitacle (12) du véhicule ou sont intégrés dans des éléments d'habillage intérieur du véhicule, notamment des tapis de sol et des éléments d'aménagement intérieur.

7. Dispositif (10) d'aération, de chauffage, et de climatisation suivant la revendication 6, **caractérisé en ce que** le conduit (22) d'admission d'air comporte un tronçon vertical (23) qui est relié à un orifice extérieur d'admission d'air situé sous le pare-brise du véhicule, et un tronçon horizontal (25), muni d'orifices d'admission d'air intérieur, qui s'étend longitudinalement à proximité de l'axe médian A longitudinal du véhicule et qui est relié à l'entrée (90) du ventilateur (72).

8. Dispositif (10) d'aération, de chauffage, et de climatisation suivant l'une quelconque des revendications 6 à 7, **caractérisé en ce que** les tuyaux (24,26,36,38,40,54,56) de refoulement d'air comportent deux tuyaux droit (26) et gauche (24) de répartition d'air aux jambes des passagers avant qui comportent successivement des tronçons horizontaux droit (30) et gauche (28) qui s'étendent longitudinalement entre le distributeur (20) et la planche de bord du véhicule, respectivement de part et d'autre de l'axe longitudinal médian A du véhicule, et qui débouchent dans deux orifices droit (34) et gauche (36) de refoulement d'air aux jambes des passagers avant orientés verticalement vers le bas au droit des pieds des passagers.

9. Dispositif (10) d'aération, de chauffage et de climatisation selon l'une quelconque des revendications 6 à 8, **caractérisé en ce que** les tuyaux (24,26,36,38,40,54,56) de refoulement d'air comportent au moins un tuyau central (36) de refoulement d'air aux jambes des passagers arrière orienté suivant l'axe longitudinal médian A du véhicule.

10. Dispositif (10) d'aération, de chauffage et de climatisation selon l'une quelconque des revendications 6 à 9, **caractérisé en ce que** les tuyaux (24,26,36,38,40,54,56) de refoulement d'air comportent deux tuyaux droit (40) et gauche (38) de répartition latérale et haute d'air, qui comportent successivement deux tronçons horizontaux opposés (42) s'étendant transversalement, deux tronçons (46) s'étendant verticalement le long des montants latéraux (13) de l'habitacle (12) du véhicule et comportant des orifices latéraux (48) droit et gauche disposés le long des montants latéraux, et deux tronçons (50) s'étendant longitudinalement le long des côtés du pavillon du véhicule et comportant des orifices latéraux (52) disposés sur des côtés du pavillon du véhicule.

11. Dispositif (10) d'aération, de chauffage, et de climatisation selon l'une quelconque des revendications 6 à 10, **caractérisé en ce que** les tuyaux (24,26,36,38,40,54,56) de refoulement d'air comportent deux tuyaux horizontaux droit (56) et gauche (54) de répartition d'air vers l'avant, qui comportent des tronçons respectifs (57, 55) qui s'étendent longitudinalement entre le distributeur (20) et la planche de bord du véhicule en suivant l'axe longitudinal médian A du véhicule et qui sont reliés dans la zone basse de la planche de bord, à un dispositif (58) de répartition avant d'air.

12. Dispositif (10) d'aération, de chauffage, et de climatisation suivant la revendication 11, **caractérisé en ce que** le dispositif (58) de répartition avant d'air est commandé par les moyens de commande du dispositif d'aération, de chauffage, et de climatisation et il comporte au moins un volet (76,78) qui répartit l'air entre un tuyau (83) de dégivrage unique, auquel est associé un ventilateur auxiliaire électrique (82) pour forcer un flux d'air au travers d'un radiateur électrique de dégivrage (84) en direction d'orifices de dégivrage (86) disposés le long du pare-brise (62) du véhicule, et entre deux tuyaux transversaux (65,69) indépendants droit et gauche d'aération des passagers avant qui débouchent chacun dans deux orifices d'aération (64,66,68,70), situés à mi-hauteur de la planche de bord de chaque côté des passagers avant droit et gauche.

## Patentansprüche

1. Vorrichtung (10) zur Belüftung, Heizung und Klimatisierung des Fahrgastraumes (12) eines Kraftfahrzeuges, die innerhalb und außerhalb des Fahrgastraumes des Fahrzeuges angeordnete Öffnungen für den Einlass von Luft aufweist und wenigstens eine Einlassleitung (22) für Luft, die diesen Öffnungen zugeordnet ist, die wenigstens einen Hauptventilator (72) versorgt, der einen Strom aus Einlassluft durch wenigstens einen Wärmetauscher (92, 94) in Richtung zu einem Verteiler (20) fördert, dessen Auslässe (96, 98, 100, 102) über Rohrleitungen (24, 26, 36, 38, 40, 54, 56) mit zugehörigen Öffnungen (48, 52, 64, 66, 68, 70, 86), die im Fahrgastraum (12) verteilt angeordnet sind, verbunden sind und die eine Anordnung zur Steuerung des Hauptventilators (72), des Wärmetauschers (92,94) und des Verteilers (20) aufweist, welche ein wahlweises Verteilen von Luftströmen unterschiedlicher Stärken und Temperaturen in einzelne Bereiche des Fahrgastraumes ermöglicht, **dadurch gekennzeichnet, dass** der Verteiler (20) in Querrichtung in einer zentralen Stellung angeordnet ist und in Längsrichtung hinter einer Sitzreihe und dass die Auslässe (96, 98, 100, 102) des Verteilers (20) auf Höhe des Bodens (16) des Fahrzeuges angeordnet sind.

2. Vorrichtung (10) zur Belüftung, Heizung und Klimatisierung nach Anspruch 1, **dadurch gekennzeichnet, dass** der Verteiler (20) ein Gehäuse aufweist, in dessen Oberseite (18) die Auslässe (96, 98, 100, 102) ausgebildet sind, mit denen die verschiedenen Rohrleitungen (24, 26, 36, 38, 40,54, 56) zur Verteilung der Luft im Fahrgastraum (12) des Fahrzeuges verbunden sind.

3. Vorrichtung (10) zur Belüftung, Heizung und Klimatisierung nach Anspruch 2, **dadurch gekennzeichnet, dass** das Gehäuse des Verteilers (20) Teil eines Blocks (14) ist, der einen der Erwärmung dienenden Wärmetauscher (92) und einen der Abkühlung dienenden Wärmetauscher (94) aufweist.

4. Vorrichtung (10) zur Belüftung, Heizung und Klimatisierung nach Anspruch 3, **dadurch gekennzeichnet, dass** der Block (14) eine Anordnung aufweist, die es ermöglicht, mehrere Gemische aus Luftströmen zu bilden und diese dem Verteiler (20) zuzuführen, der sie gleichzeitig unabhängig voneinander durch die verschiedenen Auslässe (96, 98, 100, 102) des Verteilers (20) abgibt.

5. Vorrichtung (10) zur Belüftung, Heizung und Klimatisierung nach einem der Ansprüche 3 oder 4, **dadurch gekennzeichnet, dass** der Block (14) den Hauptventilator (72) aufweist, wobei ein Einlass (90) der Luftzufuhr dient und wobei ein innerer Auslass des Blocks (14) einen Luftstrom durch den der Erwärmung dienenden Wärmetauscher (92) und/oder den der Abkühlung dienenden Wärmetauscher (94) fördert.

6. Vorrichtung (10) zur Belüftung, Heizung und Klimatisierung nach einem der Ansprüche 2 bis 5, **dadurch gekennzeichnet, dass** die Leitung (22) für den Einlass und die Rohrleitungen (24, 26, 36, 40, 54, 56) für die Verteilung der Luft an den Innenwänden des Fahrgastraumes (12) des Fahrzeuges befestigt sind oder in die inneren Bauteile für den Fahrgastraum des Fahrzeuges integriert sind, insbesondere in den Bodenteppich und in die inneren Ausstattungsbauteile.

7. Vorrichtung (10) zur Belüftung, Heizung und Klimatisierung nach Anspruch 6, **dadurch gekennzeichnet, dass** die Einlassleitung (22) für die Luft einen senkrechten Abschnitt (23) aufweist, der mit einer außen unterhalb der Windschutzscheibe angeordneten Einlassöffnung für die Luft verbunden und sowie einen waagrechten Abschnitt (25) aufweist, der mit inneren Einlassöffnungen für die Luft versehen ist, der sich in Längsrichtung in der Nähe der längs verlaufenden Mittenachse A des Fahrzeuges erstreckt und der mit dem Einlass (90) des Ventilators (72) verbunden ist.

8. Vorrichtung (10) zur Belüftung, Heizung und Klimatisierung nach einem der Ansprüche 6 bis 7, **dadurch gekennzeichnet, dass** die Rohrleitungen (24, 26, 36, 38, 40, 54, 56) für die Verteilung der Luft zwei rechte und linke Rohrleitungen (26) und (24) für die Verteilung der Luft in Richtung der Beine der vorn sitzenden Insassen aufweisen, die mit sich daran anschließenden waagrechten rechten und linken Abschnitten (30) und (28) versehen sind, welche sich in Längsrichtung zwischen dem Verteiler (20) und dem Armaturenbrett des Fahrzeuges zu beiden Seiten der längs verlaufenden Mittenachse A des Fahrzeuges erstrecken und die in zwei rechten und linken Öffnungen (34) und (36) für die Zufuhr der Luft in Richtung der Beine der vorn sitzenden Insassen münden, wobei die Öffnungen senkrecht nach unten ausgerichtet und gegenüber den Füssen der Insassen angeordnet sind.

9. Vorrichtung (10) zur Belüftung, Heizung und Klimatisierung nach einem der Ansprüche 6 bis 8, **dadurch gekennzeichnet, dass** die Rohrleitungen (24, 26, 36, 38, 40, 54, 56) für die Verteilung der Luft wenigstens eine zentrale Rohrleitung (36) zur Verteilung der Luft in Richtung der Beine der hinten sitzenden Insassen aufweist, die entlang der längs verlaufenden Mittenachse A des Fahrzeuges ausgerichtet ist.

10. Vorrichtung (10) zur Belüftung, Heizung und Klimatisierung nach einem der Ansprüche 6 bis 9, **dadurch gekennzeichnet, dass** die Rohrleitungen (24, 26, 36, 38, 40, 54, 56) für die Verteilung der Luft zwei rechte und linke Rohrleitungen (40) und (38) für die seitliche und obere Verteilung von Luft aufweisen, die mit sich daran anschließenden zwei waagrechten sich gegenüber liegenden Abschnitten (42) versehen sind, die sich in Querrichtung erstrecken, mit zwei Abschnitten (46) versehen sind, die sich senkrecht entlang der seitlichen Träger (13) des Fahrgastraumes (12) des Fahrzeuges erstrecken und die mit seitlichen rechts und links ausgebildeten Öffnungen (48) entlang der seitlichen Träger versehen sind und die zwei Abschnitte (50) aufweisen, die sich in Längsrichtung entlang der Seiten des Daches des Fahrzeuges erstrecken und die mit seitlichen Öffnungen (52) versehen sind, die an den Seiten des Daches des Fahrzeuges ausgebildet sind.

11. Vorrichtung (10) zur Belüftung, Heizung und Klimatisierung nach einem der Ansprüche 6 bis 10, **dadurch gekennzeichnet, dass** die Rohrleitungen (24, 26, 36, 38, 40, 54, 56) für die Verteilung der Luft zwei waagrechte rechte und linke Rohrleitungen (56) und (54) für die Verteilung der Luft nach vorn aufweisen, die mit Abschnitten (57 bzw. 55) versehen sind, welche sich in Längsrichtung zwischen dem Verteiler (20) und dem Armaturenbrett des Fahrzeuges entlang der längs verlaufenden Mittenachse A des Fahrzeuges erstrecken und die im unteren Bereich des Armaturenbrettes mit einer vorderen Anordnung (58) zur Verteilung von Luft verbunden sind.

12. Vorrichtung (10) zur Belüftung, Heizung und Klimatisierung nach Anspruch 11, **dadurch gekennzeichnet, dass** die vordere Anordnung (58) zur Verteilung von Luft mittels einer Anordnung zur Steuerung der Vorrichtung zur Belüftung, Heizung und Klimatisierung gesteuert wird und wenigstens eine Klappe (76, 78) aufweist, die die Luft zwischen einer einzigen Rohrleitung (83) für die Entfrostung, der ein zusätzlicher elektrischer Ventilator (82) zugeordnet ist zur Förderung eines Luftstromes durch eine Heizanordnung (84) für die Entfrostung hindurch in Richtung Entfrosteröffnungen (86), die entlang der Windschutzscheibe (62) des Fahrzeuges angeordnet sind und zwischen zwei quer verlaufenden, unabhängigen, rechten und linken Rohrleitungen (65, 69) für die Luftzufuhr zu den vorn sitzenden Insassen verteilt, die jeweils in zwei Öffnungen (64, 66, 68, 70) für die Luftzufuhr münden, welche auf halber Höhe des Armaturenbrettes zu beiden Seiten der rechts und links vorn sitzenden Insassen angeordnet sind.

## Claims

1. An arrangement (10) for the ventilation, heating and air-conditioning of a passenger compartment (12) of a motor vehicle, of the type comprising orifices for the intake of internal and external air into the passenger compartment of the vehicle and at least one air intake conduit (22) associated with said orifices, which feeds at least one main fan (72) which forces a flow of intake air through at least one heat exchanger (92, 94) in the direction of a distributor (20) whose outlets (96, 98, 100, 102) are connected by ducts (24, 26, 36, 38,40, 54, 56) to associated air delivery orifices (48, 52, 64, 66, 68, 70, 86) distributed in the passenger compartment (12), and of the type comprising means for controlling the main fan (72), the exchanger (92, 94) and the distributor (20) which make it possible to diffuse selectively in zones of the passenger compartment discharge air flows at a variable flow rate and temperature,
**characterised in that** the distributor (20) is arranged transversely in a central position and longitudinally to the rear of a row of seats, and that the outlets (96, 98, 100, 102) of the distributor (20) are disposed at the level of the floor (16) of the vehicle.

2. A ventilation, heating and air-conditioning arrangement (10) according to claim 1 **characterised in that** the distributor (20) comprises a casing, in an upper face (18) of which are disposed the outlets (96, 98, 100, 102) to which the different ducts (24, 26, 36, 38, 40, 54, 56) for the discharge of air into the passenger compartment (12) of the vehicle are connected.

3. A ventilation, heating and air-conditioning arrangement (10) according to claim 2 **characterised in that** the casing of the distributor (20) is part of a unit (14) which comprises a heating heat exchanger (92) and a cooling heat exchanger (94).

4. A ventilation, heating and air-conditioning arrangement (10) according to claim 3 **characterised in that** the unit (14) comprises means making it possible to produce different air flow mixtures and to channel them towards the distributor (20) to be diffused simultaneously and independently through the different outlets (96, 98, 100, 102) of the distributor (20).

5. A ventilation, heating and air-conditioning arrangement (10) according to one of claims 3 and 4 **characterised in that** the unit (14) comprises the main fan (72) of which an intake (90) permits the intake of air and of which an outlet which is internal to the unit forces a flow of air through a heating exchanger (92) and/or a cooling exchanger (94).

6. A ventilation, heating and air-conditioning arrangement (10) according to any one of claims 2 to 5 **characterised in that** the intake conduits (22) and the air delivery ducts (24, 26, 36, 38, 40, 54, 56) are fixed on internal walls of the passenger compartment (12) of the vehicle or are integrated into internal trimming elements of the vehicle, in particular floor carpets and internal equipment elements.

7. A ventilation, heating and air-conditioning arrangement (10) according to claim 6 **characterised in that** the air intake conduit (22) comprises a vertical portion (23) which is connected to an external air intake orifice disposed below the windscreen of the vehicle and a horizontal portion (25) provided with internal air intake orifices which extends longitudinally in the proximity of the longitudinal centre line A of the vehicle and which is connected to the intake (90) of the fan (72).

8. A ventilation, heating and air-conditioning arrangement (10) according to either one of claims 6 and 7 **characterised in that** the air delivery ducts (24, 26, 36, 38, 40, 54, 56) comprise two right (26) and left (24) ducts for the distribution of air to the legs of the front passengers which successively comprise right (30) and left (28) horizontal portions which extend longitudinally between the distributor (20) and the fascia of the vehicle on respective sides of the longitudinal centre line A of the vehicle and which open into two right (34) and left (36) orifices for the discharge of air to the legs of the front passengers which are oriented vertically downwardly in line with the feet of the passengers.

9. A ventilation, heating and air-conditioning arrangement (10) according to any one of claims 6 to 8 **characterised in that** the air delivery ducts (24, 26, 36, 38, 40, 54, 56) comprise at least one central duct (36) for the delivery of air to the legs of the rear passengers which is oriented along the longitudinal centre line A of the vehicle.

10. A ventilation, heating and air-conditioning arrangement (10) according to any one of claims 6 to 9 **characterised in that** the air delivery ducts (24, 26, 36, 38, 40, 54, 56) comprise two right (40) and left (38) ducts for lateral and high distribution of air which successively comprise two transversely extending opposed horizontal portions (42), two portions (46) extending vertically along the lateral pillars (13) of the passenger compartment (12) of the vehicle and comprising right and left lateral orifices (48) disposed along the lateral pillars, and two portions (50) extending longitudinally along the sides of the roof head of the vehicle and comprising lateral orifices (52) disposed on sides of the roof head of the vehicle.

11. A ventilation, heating and air-conditioning arrangement (10) according to any one of claims 6 to 10 **characterised in that** the air delivery ducts (24, 26, 36, 38, 40, 54, 56) comprise two right (56) and left (54) horizontal ducts for the distribution of air forwardly, which comprise respective portions (57, 55) which extend longitudinally between the distributor (20) and the fascia of the vehicle following the longitudinal centre line A of the vehicle and which are connected in the low region of the fascia to a front air distribution device (58).

12. A ventilation, heating and air-conditioning arrangement (10) according to claim 11 **characterised in that** the front air distribution device (58) is controlled by the means for controlling the ventilating, heating and air-conditioning arrangement and it comprises at least one flap (76, 78) which distributes the air between a single defrosting duct (83) with which there is associated an auxiliary electric fan (82) for forcing a flow of air through an electrical defrosting radiator (84) in the direction of defrosting orifices (86) disposed along the windscreen (62) of the vehicle and between two right and left independent transverse ducts (65, 69) for ventilation for the front passengers which open each into two ventilation orifices (64, 66, 68, 70) disposed at the halfway height of the fascia at each side of the right and left front passengers.
